# DEMANDE DE BREVET EUROPEEN

(11) **EP 1 319 862 A2**
(43) Date de publication de la demande: **18.06.2003**
(21) Numéro de dépôt: 02293076.2
(22) Date de dépôt: 12.12.2002
(51) Int. Cl.: F16F 7/10

(54) **Dispositif d'absorption de vibrations**

(30) Priorité: 14.12.2001 FR 0116251
(71) Demandeur: Renault s.a.s., 92100 Boulogne Billancourt (FR)
(72) Inventeur: Fumex, Michel, 78460 Chevreuse (FR); Zhang, Charles, 78280 Guyancourt (FR); Thevenard, Christophe, 27600 Gaillon (FR)

(57) **Abrégé**

Dispositif d'absorption 1 de vibrations d'une pièce massive montée dans une caisse de véhicule, comprenant au moins une lame souple 2, et au moins une couche visqueuse 4 au moins partiellement solidaire de la lame souple, caractérisé par le fait qu'il comprend au moins un moyen d'amplification de l'amplitude du mouvement de la lame souple.

## Description

La présente invention relève du domaine des dispositifs d'amortissement des vibrations de pièces mécaniques.

Le confort acoustique du conducteur ou des passagers d'un véhicule automobile est un facteur prenant une importance grandissante lors de la conception du véhicule. Les pièces mécaniques de carrosserie dans la zone d'accueil du groupe motopropulseur, telles que le support de la boîte de vitesses ou le support moteur, ont un rôle primordial pour le confort acoustique. En effet, la résonance de pièces mécaniques peut générer une forte amplitude vibratoire de la caisse, et, par conséquent, un fort niveau sonore dans l'habitacle.

Pour améliorer le confort acoustique du conducteur et des passagers du véhicule, on peut chercher, soit à déplacer la fréquence de résonance des pièces mécaniques dans une bande de fréquences moins gênante pour les occupants de l'habitacle, ou encore à diminuer l'amplitude de la résonance de la pièce mécanique. Pour cela, différents systèmes d'amortissement peuvent être utilisés.

Dans le domaine de l'automobile, le matériau amortissant habituel est un insonorisant en feuille fusible, dont on revêt les pièces mécaniques à traiter. Néanmoins, de tels matériaux s'avèrent insuffisants pour des pièces mécaniques massives ou de forte épaisseur, ce qui est le cas des supports de moteur ou de boîtes de vitesses.

La demande de brevet français 2 794 828 décrit un dispositif d'amortissement d'une pièce mécanique, présentant au moins une fréquence de résonance à laquelle elle est susceptible d'être excitée, le dispositif comportant une lame fixée sur ladite pièce, par laquelle se dissipe l'énergie issue de la résonance de ladite pièce.

Selon différents modes de réalisation, la lame peut être constituée de plusieurs couches métalliques séparées par une matière visco-élastique. La lame peut être fixée sur la pièce mécanique au niveau où l'amplitude de vibration de la pièce mécanique à la résonance est maximale. La lame peut être fixée à une extrémité sur la pièce mécanique, l'autre extrémité étant laissée libre. Ce dispositif donne satisfaction en terme d'absorption des vibrations. Toutefois, on cherche à obtenir des dispositifs compacts et dont l'implantation dans le logement moteur d'un véhicule automobile soit aisée.

La présente invention propose un dispositif d'absorption d'énergie compact tout en assurant une dissipation élevée de l'énergie vibratoire en énergie calorifique.

Le dispositif d'absorption de vibrations, selon un aspect de l'invention, est destiné à une pièce massive montée dans une caisse de véhiculé.

Le dispositif comprend au moins une lame souple et au moins une couche visqueuse au moins partiellement solidaire de la lame souple.

En outre, le dispositif comprend au moins un moyen d'amplification de l'amplitude du mouvement de la lame souple.

Dans un mode de réalisation de l'invention, le moyen d'amplification comprend une masse.

Dans un mode de réalisation de l'invention, la lame souple est métallique.

Avantageusement, la lame souple comprend une zone de fixation disposée à une première extrémité de ladite lame souple, le moyen d'amplification étant disposé plus près de la première extrémité que d'une extrémité libre opposée à la première extrémité.

Dans un mode de réalisation de l'invention, un trou traverse la lame souple dans la zone de fixation.

Avantageusement, le moyen d'amplification est fixé directement sur la lame souple.

Avantageusement, le dispositif comprend une pluralité de lames souples disposées parallèlement les unes aux autres, et une pluralité de couches visqueuses disposées entre les lames souples.

De préférence, une seule des lames souples comprend une zone de fixation.

L'invention propose également une pièce de fixation d'un organe massif susceptible de vibrer. La pièce de fixation comprend un élément de fixation présentant au moins un point de fixation de l'organe massif et un dispositif d'absorption de vibrations tel que décrit ci-dessus, monté à distance du point de fixation.

Avantageusement, le dispositif d'absorption de vibrations est monté sur la pièce de fixation en un lieu présentant une amplitude vibratoire supérieure à celui du point de fixation de l'organe massif.

L'invention propose également un véhicule automobile comprenant au moins un organe massif susceptible de vibrer, tel qu'une boîte de vitesses, et une pièce de fixation dudit organe massif, équipée du dispositif d'absorption de vibrations.

On parvient ainsi à réduire la transmission de vibrations mécaniques d'un organe vibrant en fonctionnement, tel qu'un moteur ou une boîte de vitesses, à la caisse du véhicule. Il en résulte une diminution du bruit dans l'habitacle du véhicule, un tel bruit étant en partie provoqué par des vibrations mécaniques de la caisse.

La présente invention sera mieux comprise à l'étude de la description détaillée de quelques modes de réalisation pris à titre d'exemples nullement limitatifs et illustrés par les dessins annexés, sur lesquels :
- la figure 1 est une vue en perspective d'un dispositif d'absorption de vibrations selon un aspect de l'invention ;
- la figure 2 est une vue en coupe transversale d'une variante de la figure 1 ; et
- la figure 3 est une vue en perspective d'une pièce de fixation selon un aspect de l'invention.

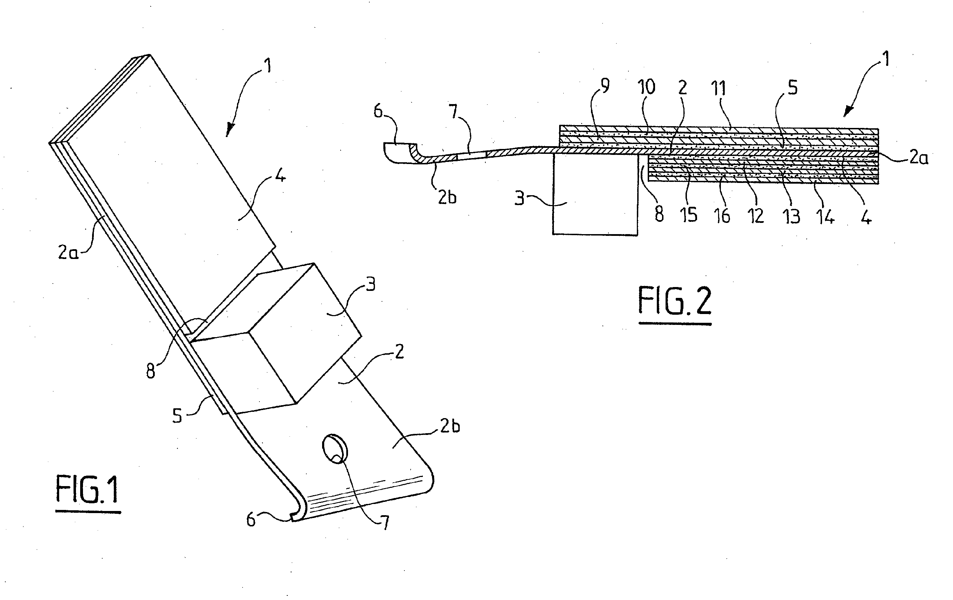

Comme on peut le voir sur la figure 1, le dispositif d'absorption de vibrations 1 comprend une lame souple métallique 2, une masse 3, une première couche visqueuse 4 et une deuxième couche visqueuse 5.

La lame souple 2 est de forme générale allongée, par exemple d'environ 100 mm de longueur, 35 mm de largeur et 1 mm d'épaisseur.

La lame souple 2 comprend une première extrémité 2a libre, recouverte sur ses deux faces opposées par respectivement les première et deuxième couches visqueuses 4 et 5, et une deuxième extrémité 2b opposée à l'extrémité 2a et pourvue d'un rebord 6 plié à angle droit et d'un trou traversant 7 apte à recevoir un moyen de fixation tel qu'une vis, non représentée. Le trou 7 est disposé sur une zone plane de la lame 2 entre la masse 3 et le rebord 6. Les couches visqueuses 4 et 5 peuvent être d'épaisseur comprise entre 1 et 3 mm.

La masse 3 est de forme parallélépipédique, de longueur de l'ordre de 20 à 25 mm, de largeur de l'ordre de 28 à 30 mm, et d'épaisseur comprise entre 20 et 25 mm, ces trois dimensions étant prises sur les mêmes axes d'un repère tridimensionnel que celles de la lame souple 2.

La masse 3, en général métallique mais pouvant être en d'autres matériaux, est fixée sur la lame souple 2, par exemple par collage, par vissage ou encore par soudure. La masse 3 est montée sur la même face de la lame souple 2 que la première couche visqueuse 4 et est disposée entre ladite couche visqueuse 4 qui s'étend seulement sur une portion de la longueur de la lame souple 2 et le trou traversant 7. Plus précisément, un petit espace 8 d'un ou plusieurs millimètres subsiste entre la masse 3 et la couche visqueuse 4, laquelle s'étend jusqu'à l'extrémité 2a de la lame souple 2.

La couche visqueuse 5 est plus longue que la couche visqueuse 4 et s'étend de l'extrémité libre 2a de la lame souple 2 jusqu'à sensiblement le niveau de la face de la masse 3 disposé du côté du trou traversant 7.

Le dispositif d'absorption de vibrations 1 est prévu pour être fixé sur une pièce de fixation susceptible de vibrer.

Sur la figure 2, est illustrée une variante de la figure 1, sur laquelle les références des éléments semblables ont été reprises.

La lame souple 2 est ici dépourvue de rebord d'extrémité et est plane, d'épaisseur comprise entre 0,5 et 1,5 mm, par exemple 1 ou 1,2 mm.

Sur la face libre de la couche visqueuse 5, est prévue une autre lame métallique 9, de longueur semblable à celle de la couche visqueuse 4, et d'épaisseur de l'ordre de 0,3 à 1 mm, par exemple 0,5 mm. La lame 9 est elle-même recouverte d'une couche visqueuse 10, elle-même recouverte d'une autre lame 11 de forme semblable.

Le dispositif d'absorption 1 comprend, du côté de la couche visqueuse 4, trois lames supplémentaires 12, 13 et 14, et deux couches visqueuses supplémentaires 15 et 16, intercalées respectivement entre les lames 12 et 13 et 13 et 14, et de dimensions identiques à la couche visqueuse 4. La masse 3 est séparée des couches visqueuses 4, 15 et 16 et des lames 12, 13 et 14 par l'espace 8. Toutefois, on peut à titre de variante ne pas prévoir d'espace entre la couche visqueuse 4 et la masse 3. La masse 3 est alors directement en contact avec une extrémité des couches visqueuses 4, 15 et 16 et des lames 12, 13 et 14. Les lames 2, 9, 11, 12, 13 et 14 sont maintenues par les couches visqueuses et n'ont pas de contact direct entre elles.

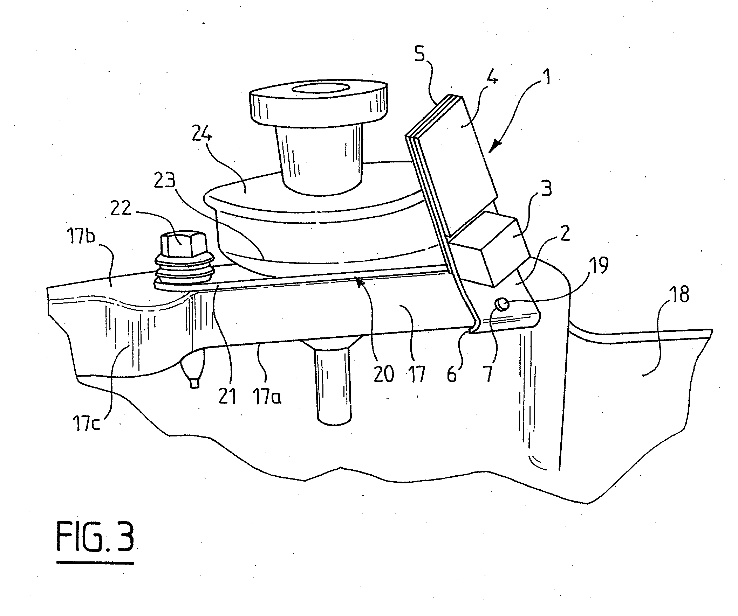

Comme on peut le voir sur la figure 3, un dispositif d'absorption de vibrations 1, du type illustré sur la figure 1, est monté sur une pièce de support de boîte de vitesses 17 se présentant sous la forme d'une semelle en tôle épaisse, en général soudée sur un longeron 18 d'une caisse de véhicule. La pièce 17 comprend une face inférieure 17a en contact avec le longeron 18, une face supérieure 17b et une face latérale 17c, de quelques centimètres de hauteur.

Le dispositif d'absorption de vibrations 1 est fixé au moyen d'une vis 19 passant dans le trou 7 de la lame souple 2 et engagée dans un trou fileté, non visible sur la figure 3, ménagé dans l'épaisseur de la pièce de fixation 17 à partir de la face latérale 17c.

Sur la face supérieure 17b de la pièce 17, est monté un tampon ou silent-bloc 20, comprenant une platine métallique 21 fixée par au moins une vis 22 à la pièce de fixation 17, une coupelle métallique 23 et une partie d'amortissement 24, réalisée en caoutchouc ou en matériau élastomère.

De façon connue, une boîte de vitesses, ou un moteur, non représenté, sont supportés par la partie d'amortissement 24. Toutefois, certaines vibrations mécaniques sont transmises à la coupelle 22, à la platine 21 et à la pièce de fixation 17, laquelle est solidaire du longeron 18.

La présence du dispositif 1 permet de dériver une partie de l'énergie vibratoire en provoquant sa dissipation, c'est-à-dire la transformation de l'énergie mécanique en énergie calorifique, dans les couches visqueuses 4 et 5 du dispositif 1. La masse 3 permet d'amplifier l'amplitude des oscillations du dispositif 1 et de dériver une partie plus importante de l'énergie vibratoire issue du moteur ou de la boîte de vitesses et transmise à la pièce de fixation 17.

Le positionnement de la masse 3, plus proche de la zone de fixation formée par le trou 7 que de l'extrémité libre 2a de la lame souple 2, permet un amplification importante, avec un facteur de l'ordre de 2 à 3, de l'amplitude des mouvements du dispositif 1.

Le rebord 6 passe sous la pièce de fixation 17 et permet un positionnement relatif du dispositif 1 sur la pièce de fixation 17, et donc un montage facile et économique. Le rebord 6 est plié selon un axe de pliure oblique par rapport à l'axe longitudinal de la lame souple 2, par exemple avec un angle de l'ordre de 35 à 45°, pour monter la lame 2 en oblique, ce qui peut s'avérer intéressant pour des raisons d'encombrement à proximité de la pièce de fixation 17.

Le point d'ancrage du dispositif 1 sur la pièce de fixation 17, est choisi tel que le déplacement audit point d'ancrage soit supérieur au déplacement au point d'entrée des vibrations, c'est-à-dire dans la zone de la pièce 17 proche de la vis 22.

En d'autres termes, on fixe le dispositif d'absorption 1 en un point de déplacement maximal dû aux vibrations de la pièce de fixation 17 et compatible avec les contraintes d'encombrement sous capot d'un véhicule automobile.

En tout état de cause, le dispositif d'absorption 1 sera généralement disposé à distance de la vis 22.

Les vibrations les plus gênantes pour le conducteur ou les passagers d'un véhicule automobile étant généralement situées dans le domaine des centaines de Hertz, on prévoit un dispositif d'absorption qui soit particulièrement efficace dans ce domaine, avec, par exemple, une fréquence de résonance prévue aux alentours de 450 Hz.

Bien entendu, on prévoit que le dispositif d'absorption 1 soit résistant à la chaleur susceptible de régner à proximité d'un moteur thermique ou d'une boîte de vitesses. Le matériau constituant les couches visqueuses sera choisi en tenant compte de cette contrainte.

En outre, pour favoriser l'absorption d'énergie par le dispositif d'absorption 1, on prévoit que la couche visqueuse 5, disposée du côté de la lame souple 2 opposée à la masse 3, s'étende sur la plus grande longueur possible de la lame souple compatible avec la fixation de la lame souple 2 sur la pièce de fixation 17.

Dans le cas d'une fixation de la lame souple 2 par collage, on peut prévoir une couche visqueuse 5 s'étendant sur l'ensemble de la longueur de la lame souple 2. Toutefois, la fixation sera préférablement assurée par vissage ou par soudure. Dans ce cas, la couche visqueuse 5 sera arrêtée à la distance la plus faible possible, de l'extrémité 2b de la lame souple 2 compatible avec le trou de fixation 7 dans le cas du vissage, ou avec un point de soudure, non représenté, dans le cas de la soudure.

Le dispositif d'absorption, selon l'invention, est particulièrement efficace pour une bande large de fréquence par exemple de 450 à 750 Hz, ce qui est particulièrement avantageux et assure un confort élevé aux utilisateurs du véhicule, dans lequel un ou plusieurs dispositifs d'absorption 1 sont montés.

Un tel dispositif d'absorption peut être monté, outre sur les supports du groupe motopropulseur ou de la boîte de vitesses, également sur des supports de trains roulants ou tout autre organe mécanique . massif susceptible de transmettre des vibrations mécaniques à la caisse du véhicule.

## Revendications

1. Dispositif d'absorption (1) de vibrations d'une pièce massive montée dans une caisse de véhicule, comprenant au moins une lame souple (2), et au moins une couche visqueuse (4) au moins partiellement solidaire de la lame souple, **caractérisé par le fait qu'**il comprend au moins un moyen d'amplification de l'amplitude du mouvement de la lame souple.

2. Dispositif selon la revendication 1, **caractérisé par le fait que** le moyen d'amplification comprend une masse (3).

3. Dispositif selon la revendication 1 ou 2, **caractérisé par le fait que** la lame souple est métallique.

4. Dispositif selon l'une quelconque des revendications précédentes, **caractérisé par le fait que** la lame souple (2) comprend une zone de fixation disposée à une extrémité (2b) de la lame souple, le moyen d'amplification étant disposé plus près de ladite extrémité que d'une extrémité libre (2a) opposée à ladite extrémité (2b).

5. Dispositif selon la revendication 4, **caractérisé par le fait qu'**un trou (7) traverse la lame souple dans la zone de fixation.

6. Dispositif selon l'une quelconque des revendications précédentes, **caractérisé par le fait que** le moyen d'amplification est fixé directement sur la lame souple.

7. Dispositif selon l'une quelconque des revendications précédentes, **caractérisé par le fait qu'**il comprend une pluralité de lames souples (2, 9, 11, 12, 13, 14) disposées parallèlement les unes aux autres, et une pluralité de couches visqueuses (4, 5, 10, 15, 16) disposées entre les lames souples.

8. Dispositif selon la revendication 7, **caractérisé par le fait qu'**une seule des lames souples comprend une zone de fixation.

9. Pièce de fixation d'un organe massif susceptible de vibrer, **caractérisé par le fait qu'**elle comprend un élément de fixation (17) présentant au moins un point de fixation de l'organe massif et un dispositif selon l'une quelconque des revendications précédentes monté à distance du point de fixation.

10. Véhicule comprenant au moins un organe massif susceptible de vibrer et une pièce selon la revendication 9.
